# EUROPEAN PATENT APPLICATION

(11) **EP 4 325 410 A1**
(43) Date of publication of application: **21.02.2024**
(21) Application number: 22788426.9
(22) Date of filing: 13.04.2022
(51) Int. Cl.: G06Q 20/20, G06Q 20/32, G06Q 20/40, B62B 3/14, G06K 19/06, G06N 20/00, G06N 3/08, G06F 21/62

(54) **PAYMENT METHOD AND PAYMENT SYSTEM USING USER TERMINAL OR DEDICATED TERMINAL INSTALLED IN PRODUCT TRANSFER MEANS**

(30) Priority: 13.04.2021 KR 20210047635; 13.05.2021 KR 20210061756
(71) Applicant: GHOST PASS Inc., Gwangju 61005 (KR)
(72) Inventor: LEE, Seon Gwan, Gwangju 61265 (KR); PARK, Sin Young, Gwangju 61925 (KR)
(74) Representative: HGF
(86) International application number: PCT/KR2022/005330
(87) International publication number: WO 2022/220570

(57) **Abstract**

A payment method and payment system using a user terminal are provided. A method of performing payment using a user terminal by a payment system includes recognizing, by the user terminal, a product to be purchased, transmitting, by a seller terminal that recognizes biometric information about a user, the biometric information about the user to the user terminal, performing, by the user terminal, identity authentication, based on whether the biometric information about the user received from the seller terminal matches biometric information pre-stored in the user terminal, and in a case where identity authentication is successfully performed on the user terminal, performing, by the user terminal, payment on a product recognized through the user terminal.

## Description

### Technical field

Various embodiments of the present disclosure relate to technology of performing payments for goods or services offline using a user terminal using biometric information recognition-based technology.

Various embodiments of the present disclosure relate to technology by which a consumer recognizes a product that he/she wants to purchase and performs payment using a dedicated terminal installed in a product transportation unit.

### Background art

As technology has developed, payment methods for purchasing goods have also gradually become more diverse. In particular, many methods for performing payment have been developed through smartphones, which almost everyone always carries with them.

Accordingly, payment may be performed using disposable barcodes or QR codes generated in smartphones, and users may authenticate biometric information, such as facial images, iris, and fingerprints, through smartphones and perform payment accordingly.

However, a product that a user wishes to purchase has generally been recognized in a manner of recognizing a barcode displayed on goods with a barcode reader in the store or recognizing goods by staff of the store and performing inputting on a point-of-sale (POS) machine.

Therefore, when a purchaser purchases multiple products, it takes time to recognize the products in order to pay for them, and as a result, when there are many customers in a particular store, congestion may occur at a payment location.

Accordingly, there was a need for a new system that could pay for purchased products in a more convenient and faster manner.

In addition, for example, a consumer may recognize a product he or she wants to purchase by using a camera mounted on his or her smartphone or other units and make payment through the smartphone.

However, in cases in which consumers purchase multiple products, such as in large supermarkets, there is inconvenience in recognizing the products the consumer wants to purchase individually.

Therefore, there was a need for a system that would automatically recognize products consumers want to purchase and perform payment without the user having to directly recognize the products one by one using a terminal, such as a smartphone.

In addition, there was a need for a system that allows consumers to perform payment using their smartphones even when they do not have their smartphones in their hands or a system capable of performing payment in a way that minimizes the operation of smartphones in their hands.

### Description of embodiments

### Technical problem

Various embodiments of the present disclosure are to establish a system in which recognition and payment for a selected product are automatically performed when the product is selected and purchased offline.

Various embodiments of the present disclosure are to establish an automatic payment system that minimizes an operation of a terminal owned by a consumer offline.

The problems to be solved by the present disclosure are not limited to the problems mentioned above, and other problems not mentioned may be clearly understood by those skilled in the art from the description below.

### Solution To Problem

According to one of the various embodiments of the present disclosure for solving the aforementioned problem, a method of performing payment using a user terminal by a payment system includes recognizing, by the user terminal, a product to be purchased, transmitting, by a seller terminal that recognizes biometric information about a user, the biometric information about the user to the user terminal, performing, by the user terminal, identity authentication, based on whether the biometric information about the user received from the seller terminal matches biometric information pre-stored in the user terminal, and in a case where identity authentication is successfully performed on the user terminal, performing, by the user terminal, payment on a product recognized through the user terminal.

The biometric information may include one or more of fingerprint information, iris information, facial image information, vein information, electrocardiogram information, or voice information.

The seller terminal may recognize the user terminal passing through a gate connected to the seller terminal and transmit a payment request signal to the user terminal, and the user terminal may perform payment for a product based on the payment request signal received from the seller terminal.

In the recognizing of the product to be purchased by the user terminal, in a case where an external image of the product is collected by an image capturing unit mounted on the user terminal, the user terminal may analyze the collected external image of the product to specify a type and quantity of the product.

The analyzing of the collected external image of the product to specify the type and quantity of the product may be performed by an artificial intelligence (AI) engine mounted on the user terminal, and the AI engine may perform learning through the external image of the product.

In the recognizing of the product to be purchased by the user terminal, information about the product may be obtained through an electronic tag included in the product.

In the recognizing of the product to be purchased, only a product located within a predefined product storage member may be recognized. In addition, the product storage member may include a cart, basket, or bag.

The user terminal may provide information on a total price of one or more products recognized as products to be purchased through a display device or a sound generating device.

In the recognizing of the product to be purchased by the user terminal, in a case where a barcode or QR code is recognized by an image capturing unit mounted on the user terminal, the user terminal may specify a type of product corresponding to a collected barcode or QR code.

In the recognizing of the product to be purchased by the user terminal, a type of product whose barcode or QR code is recognized by the image capturing unit mounted on the user terminal may be specified through the barcode or QR code, and a type of product whose barcode or QR code is not recognized on a collected image may be specified through analysis of an external image of the product.

In the recognizing of the product to be purchased by the user terminal, product recognition information may be received from a product recognition device connected to the seller terminal.

Communication between the user terminal and the seller terminal may be performed using at least one of ultra wideband (UWB), near field communication (NFC), Bluetooth, ultrasonic waves, MAT, or beacons.

The performing of payment on the product recognized through the user terminal by the user terminal may further include generating, by the user terminal, a QR code or barcode including information on at least one product recognized as a product to be purchased and payment method information and performing payment, by the seller terminal recognizing the QR code or barcode, based on the product information and payment method information included in the QR code or barcode.

According to another of the various embodiments of the present disclosure for solving the aforementioned problem, a method of performing payment using a user terminal by a payment system includes recognizing, by the user terminal, a product to be purchased, recognizing biometric information about a user by the user terminal, performing identity authentication, by the user terminal, through whether the recognized biometric information matches biometric information pre-stored on the user terminal, and in a case where identity authentication is successfully performed on the user terminal, performing payment for the product recognized through the user terminal by the user terminal.

According to another of the various embodiments of the present disclosure for solving the aforementioned problem, a payment system using a user terminal includes a seller terminal recognizing the biometric information about a user and transmitting the biometric information about the user to the user terminal and a purchaser terminal recognizing a product to be purchased, performing identity authentication by determining whether the biometric information about the user received from the seller terminal matches biometric information pre-stored in an inside thereof, and performing payment on the recognized product in a case where identity authentication is successfully performed.

According to another of the various embodiments of the present disclosure for solving the aforementioned problem, a method of performing payment by a payment system using a dedicated terminal installed in a product transportation unit includes recognizing, by the dedicated terminal, at least one product to be purchased, and including the corresponding product in a preliminary purchase list when the recognized product is determined to be located in the product transportation unit, obtaining, by the dedicated terminal, identification information for performing payment on the at least one product located in the product transportation unit from a user and obtaining biometric information about the user, transmitting, by the dedicated terminal, the biometric information and payment information to a user terminal recognized through the identification information, and performing identity authentication, by the user terminal, through the received biometric information, and performing payment for the product included in the preliminary purchase list through the payment information in a case where identity authentication is successfully performed.

The identification information may include a PIN number.

The biometric information may include one or more of fingerprint information, iris information, facial image information, vein information, electrocardiogram information, or voice information.

The method of performing payment by the payment system may further include: receiving, by the dedicated terminal, whether the user terminal has performed payment; and controlling opening and closing of an access unit at a certain location when the payment is completed.

The method of performing payment by the payment system may further include receiving, by the dedicated terminal, whether the user terminal has performed payment, and providing payment completion information to the user through a display unit or audio output unit of the dedicated terminal.

The dedicated terminal may transmit payment information to the user terminal only when adult authentication-related information is received from the user terminal when there is a product requiring adult authentication among the recognized products.

When there is a product requiring adult authentication among the products recognized by the dedicated terminal, payment by the user terminal that has received the payment information may be controlled to be performed only when adult authentication is completed on the user terminal.

In the process of recognizing the product to be purchased by the dedicated terminal, when an external image of the product is collected by an image capturing unit mounted on the dedicated terminal, the dedicated terminal may transmit the collected external image of the product to a management server so that a type and quantity of the product may be specified through analysis on the management server.

The specifying of the type and quantity of the product by analyzing the external image of the product collected by the management server may be performed by an artificial intelligence (AI) engine mounted on the management server, and the AI engine may perform learning through the external image of the product.

A machine learning algorithm utilized by the AI engine may include one of haar like, convolutional neural network (CNN), YOLO, or SSD.

The recognizing of the product to be purchased by the dedicated terminal may include obtaining information on the product through an electronic tag included in the product.

The recognizing of the product to be purchased by the dedicated terminal may include specifying a type of product corresponding to a barcode or QR code collected by the dedicated terminal when the barcode or QR code is recognized by an image capturing unit mounted on the dedicated terminal.

The recognizing of the product to be purchased by the dedicated terminal may include specifying the type of product through the barcode or QR code for products whose barcode or QR code is recognized by the image capturing unit mounted on the dedicated terminal and specifying the type of product through analysis of an external image of the product whose barcode or QR code is not recognized in the collected image.

According to another of the various embodiments of the present disclosure for solving the aforementioned problem, a method of performing payment using a dedicated terminal connected to a camera installed in a product transportation unit by a payment system includes recognizing, by the dedicated terminal, at least one product to be purchased and including the corresponding product in a preliminary purchase list when the recognized product is determined to be located in the product transportation unit, obtaining, by the dedicated terminal, identification information for performing payment for the at least one product located in the product transportation unit from a user and obtaining biometric information about the user, transmitting, by the dedicated terminal, the biometric information and payment information to a user terminal recognized through the identification information, and performing, by the user terminal, identity authentication through the received biometric information, and performing payment for the product included in the preliminary purchase list through the payment information in a case where identity authentication is successfully performed.

According to another of the various embodiments of the present disclosure for solving the aforementioned problems, a payment system using a dedicated terminal installed in a product transportation unit includes a dedicated terminal recognizing at least one product to be purchased, including the corresponding product in a preliminary purchase list when the recognized product is determined to be located in the product transportation unit, obtaining identification information for performing payment on the at least one product located in the product transportation unit from a user, obtaining biometric information about the user, and transmitting the biometric information and payment information to the user terminal recognized through the identification information, and a user terminal performing identity authentication through the biometric information received from the dedicated terminal and performing payment for the product included in the preliminary purchase list through the payment information in a case where identity authentication is successfully performed.

### Advantageous Effects of Disclosure

According to an embodiment of the present disclosure, when a consumer selects an item to be purchased in a store, a consumer's terminal automatically recognizes the selected item to be purchased, and when the consumer leaves the store or is located in a certain location, payment is automatically performed based on identity authentication through biometric information about the consumer, thereby increasing consumers' convenience of product selection and payment.

According to an embodiment of the present disclosure, payment may be made through a dedicated terminal installed in a product transportation unit, and payment may be performed through identity authentication even situations where the consumer does not have his or her own terminal.

The effects of the present disclosure are not limited to the effects mentioned above, and other effects not mentioned will be clearly understood by those skilled in the art from the description below.

### Brief description of drawings

FIG. 1 is a schematic diagram of the entire environment in which a payment system operates according to an embodiment of the present disclosure.
FIG. 2 is a block diagram schematically illustrating the configuration of a user terminal according to an embodiment of the present disclosure.
FIG. 3 is a diagram illustrating how a user terminal according to an embodiment of the present disclosure recognizes and pays for a product using a payment system of the present disclosure.
FIG. 4 is a diagram illustrating how a user terminal according to another embodiment of the present disclosure recognizes and pays for a product using a payment system of the present disclosure.
FIG. 5 is a schematic diagram of the entire environment in which a payment system operates according to an embodiment of the present disclosure.
FIG. 6 is a block diagram schematically illustrating a configuration of a dedicated terminal according to an embodiment of the present disclosure.
FIG. 7 is a block diagram schematically illustrating a configuration of a management server according to an embodiment of the present disclosure.
FIG. 8 is a flowchart illustrating how a dedicated terminal according to an embodiment of the present disclosure recognizes and pays for a product using a payment system of the present disclosure.
FIGS. 9A and 9B are flowcharts illustrating how a dedicated terminal pays for a product requiring adult certification for purchase, according to an embodiment of the present disclosure.

### Best Mode

A payment method and payment system using a user terminal are illustrated. A method in which a payment system according to an embodiment of the present disclosure performs payment using a user terminal includes an operation in which a user terminal recognizing a product to be purchased, an operation in which a seller terminal that recognizes a biometric information about the user transmits the biometric information about the user to the user terminal, an operation in which the user terminal performs identity authentication by determining whether the biometric information about the user received from the seller terminal matches biometric information pre-stored in the user terminal, and an operation in which, in a case where identity authentication is successfully performed on the user terminal, the user terminal performs payment on the recognized product through the user terminal.

### Mode Of Disclosure

Terms used in the present specification are for explaining exemplary embodiments rather than limiting the present disclosure. Unless explicitly described to the contrary, a singular form includes a plural form in the present specification. As used in the specification, "comprises" and/or "comprising" does not exclude the presence or addition of one or more other elements in addition to the mentioned elements. Like reference numerals refer to like elements throughout the specification, and "and/or" includes each and every combination of one or more of the referenced elements. Although "first," "second," etc. are used to describe various components, these components are of course not limited by these terms. These terms are merely used to distinguish one component from another. Therefore, it goes without saying that a first component mentioned below may also be a second component within the technical spirit of the present disclosure.

When it is said that a part "includes" a certain element throughout the specification, this means that it does not exclude other elements but may further include other elements, unless specifically stated to the contrary. In addition, terms, such as "...unit," "module" used in the specification refer to a unit that processes at least one function or operation, which may be implemented as hardware or software, or a combination of hardware and software.

In this specification, 'user' may refer to an entity that purchases a certain product using a payment system of the present disclosure, and 'seller' may refer to an entity that sells a certain product using the payment system of the present disclosure.

Hereinafter, various embodiments of the present disclosure are described with reference to the accompanying drawings.

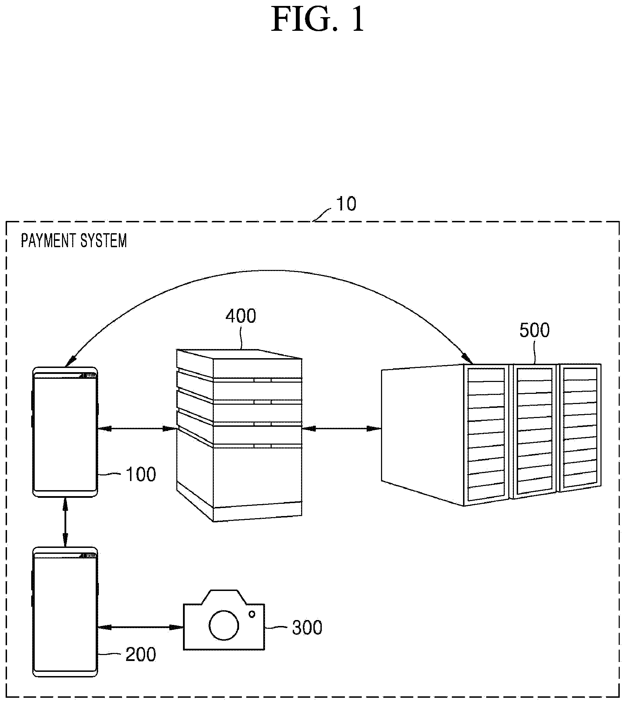

FIG. 1 is a schematic diagram of the entire environment in which a payment system 10 operates according to an embodiment of the present disclosure.

Referring to FIG. 1, the payment system 10 may be configured to include a user terminal 100, a seller terminal 200, a product recognition device 300, a management server 400, and an external server 500.

The payment system 10 may be installed and utilized in places where various products are sold offline.

The user terminal 100 is a terminal that a user uses to use the payment system 10. The user terminal 100 may recognize a product the user wants to purchase through various methods and perform payment for it.

The user terminal 100 is controlled by the user and may access the management server 400 in the payment system 10 through a web browser or computer software or applications installed on the user terminal 100. The user terminal 100 may exchange various data with the seller terminal 200, the management server 400, and the external server 500 within the payment system 10, and based on such data, the user terminal 100 may determine contents to display through a screen (display unit).

The user terminals 100 may include all types of handheld-based wireless communication devices that may be connected to a web server through a network, such as mobile phones, smartphones, personal digital assistants (PDAs), portable multimedia players (PMPs), tablet PCs, etc. and may be one of digital devices including a memory unit and equipped with a microprocessor to have computing power, such as a personal computer (e.g., a desktop computer, a laptop computer, etc.), a workstation, a PDA, a web pad, etc.

The seller terminal 200 may be a terminal used by a seller to use the payment system 10. The seller terminal 200 may manage information about products subject to sale, and when identity authentication is performed based on biometric information on the user terminal 100, the seller terminal 200 may preferentially acquire the biometric information and transmit the acquired biometric information to the user terminal 100.

According to an embodiment of the present disclosure, the biometric information used for identity authentication for payment may include any one of fingerprint information, iris information, facial image information, vein information, electrocardiogram information, or voice information, or combinations thereof.

The seller terminal 200 may be connected to and communicate with various other devices installed at a place where products are sold, and such other devices may be configured as a product recognition device 300 or a gate.

According to an embodiment, a gate is installed at a certain location (for example, an exit) where various products are sold, and the gate recognizes the user terminal 100 passing therethrough and sends information on the user terminal to the seller terminal 200, payment may be made in such a way that the seller terminal transmits a payment request signal to the recognized user terminal 100. The user terminal 100 may receive the payment request signal from the seller terminal 200 and perform payment accordingly.

This seller terminal 200 may be controlled by the seller and may access the management server 400 within the payment system 10 through a web browser or computer software or application installed on the seller terminal 200. The seller terminal 200 may exchange various data with the user terminal 100, the management server 400, and the external server 500 within the payment system 10, and based on such data, the seller terminal 200 may determine contents to be displayed through the screen (display unit).

The seller terminal 200 may include all types of handheld-based wireless communication devices that may be connected to a web server through a network, such as mobile phones, smartphones, PDAs, PMPs, tablet PCs, etc. and may be one of digital devices including a memory unit and equipped with a microprocessor to have computing power, such as a personal computer (e.g., a desktop computer, a laptop computer, etc.), a workstation, a PDA, a web pad, etc.

When the user accesses and possesses a product that the user wishes to purchase, the product recognition device 300 may recognize information on the product and transmit information about the user terminal 100 of the corresponding user and the information on the product accessed and possessed by the user to the user terminal 100 or the seller terminal 200. The method by which the product recognition device 300 recognizes a product may be performed in the same or similar manner as a product recognition method of the user terminal 100, which is described below.

In FIG. 1, the product recognition device 300 is shown in the form of a camera capable of collecting images, but alternatively, the product recognition device 300 may be configured as a barcode scanner or an electronic device capable of recognizing electronic tags.

The management server 400 may manage data so that the payment system 10 operates smoothly, and exchange necessary data with the user terminal 100 and the seller terminal 200. For example, the management server 400 may collectively manage a plurality of offline stores, and accordingly, the management server 400 may perform communication with the seller terminals 200 located in the plurality of offline stores and the user terminals 100 that wishes to make a payment at the offline store.

The external server 500 is a server that exists separately from the management server 400. According to an embodiment, the management server 400 may obtain various data necessary for a smooth operation of the payment system 10 from the external server 500, and the user terminal 100 or seller terminal 200 may also obtain necessary data through communication with the external server 500. For example, the external server 500 may include a server managed by a wholesaler providing products for sale, a credit card server for making payments, a PG server, etc.

The management server 400 and the external server 500 may include hardware, such as a controller having at least one processor, a communication module, a storage unit (e.g., a memory), or software for algorithm calculation.

According to an embodiment of the present disclosure, a communication network used for the user terminal 100, the seller terminal 200, the product recognition device 300, the management server 400, and the external server 500 to communicate within the payment system 10 may be configured regardless of a communication mode, such as wired communication or wireless communication and may be implemented as various communication networks, for example, a local area network (LAN), a metropolitan area network (MAN), or a wide area network (WAN). Preferably, the communication network according to an embodiment of the present disclosure may be the known world wide web (WWW), etc.

In detail, communication between the user terminal 100 and the seller terminal 200 located in a certain area where products are sold may be carried out through at least one of UWB, NFC, Bluetooth, ultrasonic waves, MAT, or beacons, among local area networks.

In addition, the user terminal 100 and the seller terminal 200 may verify location information about the user terminal 100 and the seller terminal 200 by using global positioning system (GPS) and generate data regarding the location information.

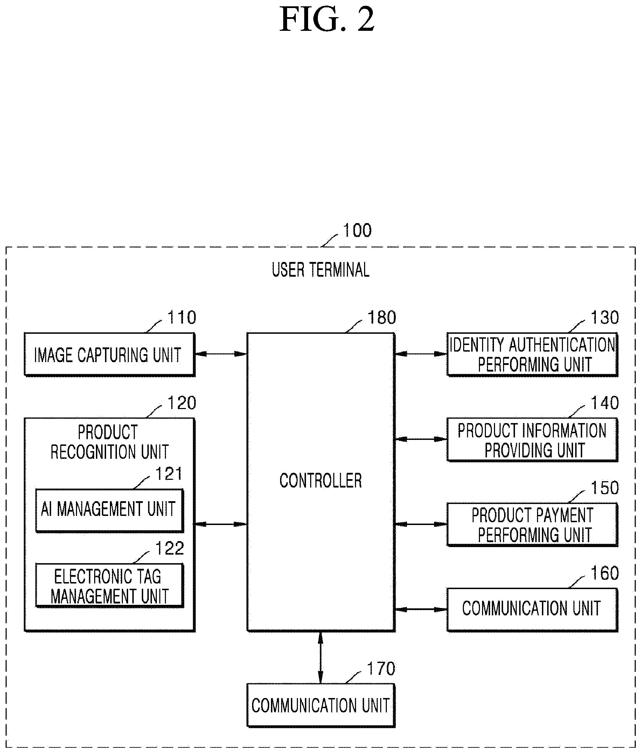

FIG. 2 is a block diagram schematically illustrating a configuration of the user terminal 100 according to an embodiment of the present disclosure.

Referring to FIG. 2, the user terminal 100 may include an image capturing unit 110, a product recognition unit 120, an identity authentication performing unit 130, a product information providing unit 140, a product payment performing unit 150, a communication unit 160, a storage unit 170, and a controller 180.

The image capturing unit 110 may visually image the surroundings of the user terminal 100 to generate an image, and the image may be configured in the form of a still image, but may also be configured in the form of a video including a plurality of frames.

When the user terminal 100 is located in a certain space using the payment system 10, the image capturing unit 110 may automatically operate and perform image capture without user operation. Alternatively, when the user runs a certain application on the user terminal 100 to use the payment system 10, the image capturing unit 110 may perform image capturing.

The product recognition unit 120 may recognize a product that the user wants to purchase around the user terminal 100 through various methods.

According to an embodiment, a method for the product recognition unit 120 to recognize a product to be purchased may be through image analysis. That is, an external image of the product may be analyzed by the image capturing unit 110 mounted on the user terminal 100 to specify a type and quantity of the product.

In this manner, the product recognition unit 120 may recognize the product to be purchased and accumulate information on the product in a format, such as a 'shopping cart' on the user terminal 100.

When analyzing and collecting the external image of the product, the product recognition unit 120 may recognize and analyze only an image of an item picked up by the user. In other words, the product recognition unit 120 may not recognize all products present in the captured image and classify them as products to be purchased, but may recognize only an item picked up by the user through image analysis.

According to an embodiment, the product recognition unit 120 may recognize the product to be purchased by recognizing a barcode or QR code marked on the product to be purchased, rather than analyzing an external image of the product.

The product recognition unit 120 may recognize the barcode or QR code present on the image captured by the image capturing unit 110, specify a type and number of products corresponding to the collected barcode or QR code, and manage a corresponding product as a product to be purchased.

According to an embodiment of the present disclosure, in recognizing a product to be purchased based on the image captured by the image capturing unit 110, the product recognition unit 120 may comprehensively use a method of analyzing the external image of the product and a method of using the barcode or QR code.

In detail, in recognizing a product to be purchased, in the case of a product whose barcode or QR code is recognized by the image capturing unit 110, the product recognition unit 120 may specify a type of the product through the recognized barcode or QR code, and in the case of a product whose barcode or QR code is not recognized from the collected image, the product recognition unit 120 may specify a type of the product through analysis of an external image of the product.

In other words, because only a portion of the product may appear in the image of the product captured by the image capturing unit 110 and the barcode or QR code marked on the product exterior may not be recognized, a product recognition method through external image analysis may be used together to increase the accuracy of product recognition.

The product recognition unit 120 according to an embodiment may additionally include an artificial intelligence (AI) management unit 121 and an electronic tag management unit 122.

The AI management unit 121 may allow the product recognition unit 120 to analyze the external image of the product obtained by the image capturing unit 110 and specify a type and quantity of the product through an AI engine mounted in the user terminal 100.

The AI engine included in the AI management unit 121 may utilize machine learning or deep learning technology. The AI engine may improve image analysis capabilities by setting multiple product images as learning data and performing learning through the set learning data.

The machine learning utilized by the AI engine may utilize at least one algorithm among haar like, CNN, and CNN-based transformation models (R-CNN, Fast R-CNN, Faster R-CNN, YOLO, SSD, Mask R-CNN).

Such an AI engine may be implemented in software within the user terminal 100.

The electronic tag management unit 122 may allow the user terminal 100 to obtain product information in an electronic tag recognition manner, rather than based on the image obtained by the image capturing unit 110, when recognizing the product to be purchased.

Electronic tags may be applied in a form that utilizes radio frequency identification (RFID) and NFC technology, and electronic tags may be included in or attached to each product in a form that includes product information, including price.

The electronic tag management unit 122 may recognize electronic tags located within a certain distance from the user terminal 100, thereby enabling the user terminal 100 to recognize products to be purchased.

According to an embodiment of the present disclosure, the product recognition unit 120 may recognize a product located within a product storage member when recognizing a product to be purchased. For example, the product storage member may be a cart, basket, or bag used at a product sales location, and the basket may be a plastic bag, shopping cart, etc.

When the product recognition unit 120 recognizes a product located within the product storage member using an image analysis method, products recognized by analyzing only external images of the products located within the product storage member in the image captured by the image capturing unit 110 may be treated as products to be purchased.

According to an embodiment, the product recognition unit 120 may recognize only products located in the product storage member used in a certain location. In other words, a product located in a personal storage or loading unit of the user may not be recognized, and only a predetermined product storage member may be recognized.

When the product recognition unit 120 recognizes a product to be purchased based on image analysis, it may be first determined through image analysis whether it is a product storage member used in a certain location, and when a product storage member used in a certain location is recognized on the image, image analysis may be additionally performed on products located within the corresponding product storage member.

When the product recognition unit 120 recognizes a product to be purchased based on communication with an electronic tag, a predetermined product storage member used in a certain location may also include an electronic tag, and accordingly, only a product present within a certain distance from the corresponding electronic tag may be recognized as a product to be purchased.

According to an embodiment, the product recognition unit 120 may not directly use the aforementioned image analysis method or electronic tag method when recognizing a product to be purchased, but may receive product recognition information from the seller terminal 200 and utilize the same.

The seller terminal 200 may be connected to the product recognition device 300, and the product recognition device 300 may recognize a product in the same or similar manner as the product recognition unit 120 of the user terminal 100 operates. In other words, the product recognition device 300 may utilize a method of recognizing a product through analysis of an external image of the product, a method of recognizing a product through a barcode or QR code marked on the product, or a method of recognizing a product through communication with an electronic tag included in the product.

When the user approaches and possesses a product, the product recognition device 300 may additionally obtain user information and provide information on the user terminal 100 to the seller terminal 200.

Such recognition of the user terminal 100 may be performed based on location information about the user terminal 100 received in real time, or the product recognition device 300 may recognize the user in a manner of collecting and analyzing a facial image of the user and determining information about the user terminal 100 corresponding to the recognized user.

According to an embodiment, the operation of the product recognition device 300 described above may be performed in the seller terminal 200. That is, the product recognition device 300 and the seller terminal 200 may be integrated and operated as one device.

The identity authentication performing unit 130 may receive biometric information from the seller terminal 200 and perform identity authentication based on whether the received biometric information matches biometric information previously stored on the user terminal 100.

For example, when a facial image of the biometric information is used for identity authentication, the seller terminal 200 may identify the user through the captured facial image of the user and transmit the corresponding facial image to the user terminal 100 corresponding to the identified user. The identity authentication performing unit 130 may compare the facial image received from the seller terminal 200 with a facial image pre-stored in the user terminal 100 and perform identity authentication when the two images are determined to match.

When the product recognition unit 120 recognizes a product that the user wants to purchase, the product information providing unit 140 may provide information on the product to the user. In detail, the product information providing unit 140 may provide information on a total price of one or more products recognized as products to be purchased to the user through a display device or sound generating device of the user terminal 100.

According to an embodiment, when the product recognition unit 120 recognizes only a product located within a predetermined product storage member, the product information providing unit 140 may provide a type, quantity, and price information about products located within the predetermined product storage member to the user.

Through this function, the user may determine the type, quantity, and number of products recognized through his or her user terminal 100 and may conveniently proceed with shopping according to his or her wishes.

The product payment performing unit 150 may perform payment for the product in a case where identity authentication is successfully performed on the identity authentication performing unit 130 of the user terminal 100.

The product payment performing unit 150 according to an embodiment may receive a payment request signal from the seller terminal 200 and proceed with payment accordingly. As described above, the seller terminal 200 may be connected to a gate installed in a certain location, and when the user or the user terminal 100 passes through the corresponding gate, the gate may recognize the user or user terminal 100 and transmit information on the user or user terminal 100 to the seller terminal 200. The seller terminal 200 may receive information on the user or the user terminal 100 from the gate, transmit a payment request signal to the corresponding user terminal 100 so that payment may proceed.

That is, when the user selects products he or she wants to purchase at a certain location offline, the user terminal 100 may recognize the selected products to be purchased, and when the user passes through the gate at the exit, payment for the recognized products may be automatically made on the user terminal 100, thereby performing selection and payment for the products.

Alternatively, the product payment performing unit 150 may perform payment for selected purchased products when the user terminal 100 reaches a certain location or leaves a certain location.

According to an embodiment, the product payment performing unit 150 may generate a QR code or barcode for all products recognized as products to be purchased by the user terminal 100, such QR code or barcode may be recognized by the seller terminal 200, and payment may be made for all products recognized as products to be purchased. That is, the QR code or barcode generated by the product payment performing unit 150 may include information on all products recognized as products to be purchased and information on a payment method.

According to another embodiment, when the seller terminal 200 recognizes the products to be purchased through the product recognition device 300 and generates a QR code or barcode, the product payment performing unit 150 may recognize the QR code or barcode and perform payment. In this case, the product payment performing unit 150 may recognize the QR code or barcode through the image capturing unit 110 of the user terminal 100. The QR code or barcode generated by the seller terminal 200 may include information on all products recognized as products to be purchased.

According to another embodiment, the product payment performing unit 150 may proceed with payment for products recognized by the product recognition unit 120 without communication with the seller terminal 200. That is, in the present embodiment, payment may be made for products recognized by the user terminal 100 without the presence of the seller terminal 200. In this case, the identity authentication performing unit 130 may perform identity authentication through biometric information obtained by the user terminal 100 itself, rather than through the seller terminal 200, and perform payment in a case where identity authentication is successfully performed.

The product payment performing unit 150 may perform payment through various payment methods, such as credit card payment, check card payment, debit card payment, bank transfer payment, virtual currency payment, point payment, and mobile payment, and such a payment method may utilize identity authentication through biometric information.

According to an embodiment, the product payment performing unit 150 may support payment through a payment initiation service provider (PSIP). PISP provides a form of financial service that does not utilize a payment infrastructure of existing banks through open API, and allows consumers to make payment or remittance using their own accounts simply by logging in to a certain service.

The communication unit 160 allows the user terminal 100 to communicate with the seller terminal 200, the management server 400, and the external server 500. A communication network used by the communication unit 160 to perform communication may be configured regardless of the communication mode, such as wired or wireless, and may be implemented as various communication networks, for example, a LAN, a MAN, or a WAN. As described above, the LAN may be implemented through UWB, NFC, ultrasonic waves, MAT, beacons, etc.

The storage unit 170 serves to store information collected, generated, and processed within various components of the user terminal 100. That is, the storage unit 170 may store information on the user, information on a payment method, and information on an algorithm used by an AI engine. This storage unit 170 may include, for example, memory, cache, buffer, etc., and may include software, firmware, hardware, or a combination of at least two or more thereof.

The controller 180 may perform a function of controlling data flow between the image capturing unit 110, the product recognition unit 120, the identity authentication performing unit 130, the product information providing unit 140, the product payment performing unit 150, the communication unit 160, and the storage unit 170. That is, the controller 180 may support the image capturing unit 110, the product recognition unit 120, the identity authentication performing unit 130, the product information providing unit 140, the product payment performing unit 150, the communication unit 160, and the storage unit 170 to perform a unique function thereof.

In FIG. 2, the image capturing unit 110, the product recognition unit 120, the identity authentication performing unit 130, the product information providing unit 140, and the product payment performing unit 150 functionally classify the controller 180, and thus, they may be integrated and configured as a single controller 180.

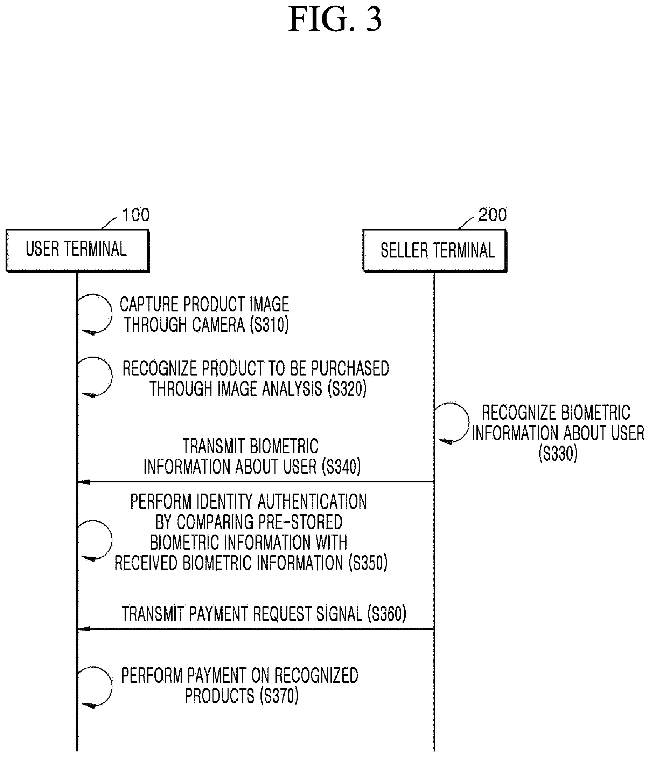

FIG. 3 is a diagram illustrating how the user terminal 100 according to an embodiment of the present disclosure recognizes and pays for a product using the payment system 10 of the present disclosure.

In FIG. 3, recognition of a product the user wishes to purchase is illustrated as being performed by capturing and analyzing images, but unlike this, recognition of a product may be performed in various manners, such as barcode recognition, QR code recognition, or electronic tag recognition.

When the user arrives at a certain place where products are sold offline and starts shopping, the image capturing unit 110, such as a camera mounted on the user terminal 100, may operate.

The user terminal 100 may capture images of surrounding products through a camera (S310), and then recognize a product to be purchased through image analysis (S320). According to an embodiment, the recognition of products to be purchased by the user terminal 100 may be performed based on image analysis for products held by the user. In other words, not all products captured in the captured image are recognized as products to be purchased, but only products held by the user in the hand or located less than a certain distance from the user may be recognized as products to be purchased. According to another embodiment, the user terminal 100 may recognize only products located within a predetermined certain product storage member as products to be purchased.

The seller terminal 200 may recognize the biometric information about the user (S330) and transmit the recognized biometric information to the user terminal 100 (S340). In this case, the seller terminal 200 may determine which user terminal 100 to transmit the biometric information about the recognized user through user information matching the biometric information or information about the user terminal 100.

For example, when a facial image of the biometric information is used for user recognition, the seller terminal 200 may identify the user through analysis of the recognized facial image and transmit the facial image to the user terminal 100 corresponding to the user. In contrast, the seller terminal 200 may transmit biometric information to a plurality of user terminals 100 located within a certain location, and the user terminal 100 to which the biometric information is to be transmitted may be specified through location information (e.g., GPS location information) transmitted by the user terminal 100 to the seller terminal 200.

After receiving biometric information from the seller terminal 200, the user terminal 100 may perform identity authentication by comparing the received biometric information with biometric information pre-stored in the user terminal 100 (S350).

Thereafter, the seller terminal 200 may transmit a payment request signal to the user terminal 100 (S360). For example, the seller terminal 200 may transmit a payment request signal when the user terminal 100 leaves the place where a certain product is sold based on the location information about the user terminal 100, or alternatively, the seller terminal 200 may transmit a payment request signal when the user reaches a certain location or when the user terminal 100 leaves the place where the certain product is sold by analyzing the user's movement in a CCTV of a certain product sales place.

After receiving the payment request signal from the seller terminal 200, the user terminal 100 may perform payment for products recognized as purchase targets (S370). According to another embodiment, even if the payment request signal is not received from the seller terminal 200, the user may proceed with the payment by operating the user terminal 100.

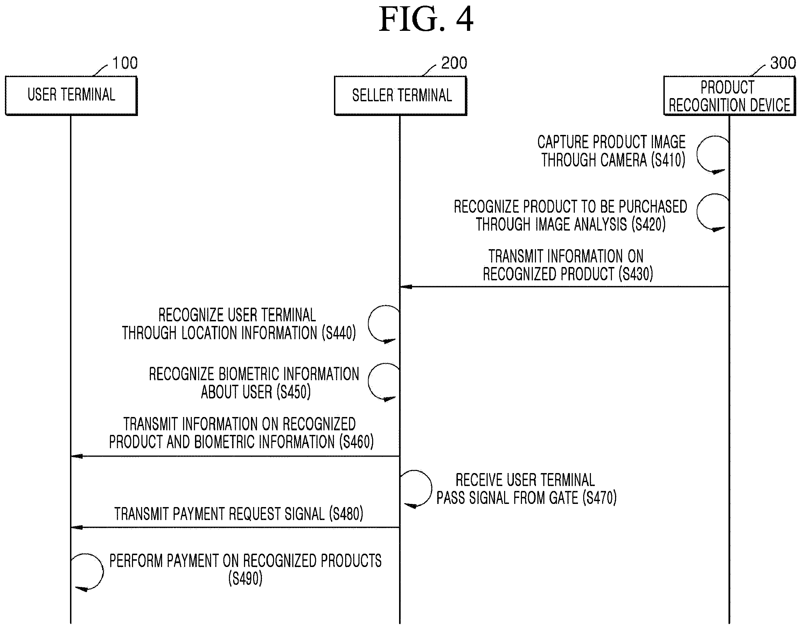

FIG. 4 is a diagram illustrating how the user terminal 100 according to another embodiment of the present disclosure recognizes and pays for a product using the payment system 10 of the present disclosure.

In FIG. 4, the product recognition device 300 exists to perform recognition of products that the user possesses for purchase. Alternatively, according to another embodiment of the present disclosure, the product recognition device 300 and the seller terminal 200 may be integrated and operated as a single device.

Referring to FIG. 4, when the user does shopping at an offline store, etc., the product recognition device 300 may capture an image of the product the user wants to purchase (S410), and recognize the product to be purchased through image analysis. (S420). According to an embodiment, an analysis technique using an AI engine may be used for image analysis.

The product recognition device 300 may transmit information on products recognized as products to be purchased to the seller terminal 200 (S430).

The seller terminal 200 according to an embodiment may recognize a location of the user terminal 100 through location information transmitted from the user terminal 100 (S440) and additionally recognize biometric information about the user (S450). Thereafter, the seller terminal 200 may transmit the recognized biometric information to the user terminal 100 recognized through the location information, and may transmit information on the recognized product received from the product recognition device 300 to the user terminal 100 together (S460).

Thereafter, the seller terminal 200 may receive a passage signal indicating that the user terminal 100 has passed from a gate connected through a local area network, etc. (S470). In contrast, the gate may capture an image through a camera installed near the gate, recognize the user through a facial image, etc. in the captured image, and transmit information on the recognized user to the seller terminal 200.

Thereafter, the seller terminal 200 may transmit a payment request signal to the recognized user terminal 100 (S480), and the user terminal 100 may perform payment for the products to be purchased included in the information received in operation S460 (S490).

As such, according to various embodiments of the present disclosure, recognition of the user, the user terminal 100, and the products the user wishes to purchase may be automatically performed in various manners, and when the user selects all the products to be purchased and moves to a certain location or leaves the certain location, payment may be performed for the selected products.

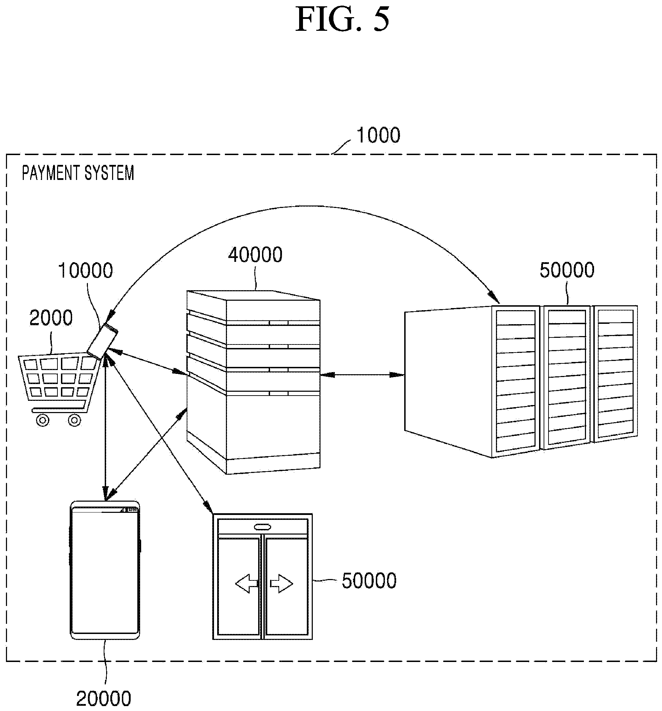

FIG. 5 is a schematic diagram of the entire environment in which a payment system 1000 operates according to an embodiment of the present disclosure.

Referring to FIG. 5, the payment system 1000 may be configured to include a dedicated terminal 10000, a user terminal 20000, a management server 30000, an external server 40000, and an access unit 50000.

The payment system 1000 may be installed and utilized in places where various products are sold offline.

The dedicated terminal 10000 may be installed and operated in a product transportation unit 2000. When the user moves a product he or she wants to purchase to the product transportation unit 2000, the dedicated terminal 10000 may recognize the corresponding product and include the corresponding product in a preliminary purchase list, and thereafter, the dedicated terminal 10000 may generate payment information for products included in the preliminary purchase list and transmit the generated payment information to the user terminal 20000.

According to an embodiment, the dedicated terminal 10000 may operate in conjunction with a camera installed on the product transportation unit 2000, and may receive an image captured by the camera and perform operations for product recognition and payment based on the image.

In this case, the dedicated terminal 10000 may be located at a self-desk or payment counter where users may recognize and pay for products by themselves, and may also be implemented as a POS terminal or kiosk device.

The user terminal 20000 may be a terminal held and controlled by the user and may access the dedicated terminal 10000 or management server 30000 within the payment system 1000 through a web browser or computer software or application installed on the user terminal 20000. The user terminal 20000 may exchange various data with the dedicated terminal 10000, the management server 30000, and the external server 40000 within the payment system 1000, and may determine contents to be displayed on a screen (a display unit) of the user terminal 20000 based on such data.

The dedicated terminal 10000 or user terminal 20000 may include any type of handheld-based wireless communication device that may be connected to a web server through a network, such as a mobile phone, smartphone, PDA, PMP, tablet PC, etc. and may be one of digital devices equipped with a memory unit and a microprocessor to have computing power, such as a personal computer (e.g., a desktop computer, a laptop computer, etc.), workstation, PDA, web pad, etc.

The user terminal 20000 may perform the role of performing payment for products that the user wants to purchase using the payment system 1000. The user terminal 20000 may exchange various information with the dedicated terminal 10000, and such communication may be accomplished through the management server 30000.

The user terminal 20000 may receive information on at least one product from the dedicated terminal 10000, and the information on the product may be delivered in the form of a preliminary purchase list managed by the dedicated terminal 10000. The user terminal 20000 may perform payment based on product information received from the dedicated terminal 10000, and identity authentication or adult authentication may be performed first for payment.

The management server 30000 may manage data so that the payment system 1000 operates smoothly, and may exchange necessary data with the dedicated terminal 10000 and the user terminal 20000. For example, the management server 30000 may collectively manage a plurality of offline stores, and accordingly, the management server 30000 may perform communication with the dedicated terminals 10000 located in the plurality of offline stores and the user terminals 20000 that wants to perform payment to purchase a product in an offline store.

The external server 40000 is a server that exists separately from the management server 30000. According to an embodiment, the management server 30000 may obtain various data necessary for a smooth operation of the payment system 1000 from the external server 40000, and the dedicated terminal 10000 or the user terminal 20000 may also obtain necessary data through communication with the external server 40000. For example, the external server 40000 may include a server managed by a wholesaler providing products for sale, a credit card server that requires communication to perform payment, a PG server, etc.

The management server 30000 and the external server 40000 may include hardware, such as a controller having at least one processor, a communication module, a storage unit (e.g., a memory), or software for algorithm calculation.

The access unit 50000 separates a certain offline space where users purchase products from the outside or other spaces, and may be configured in the form of a gate or door that operates in an open and close manner.

According to an embodiment, an opening and closing operation of the access unit 50000 may be controlled by the dedicated terminal 10000 or the management server 30000.

According to an embodiment of the present disclosure, a communication network used for the dedicated terminal 10000, the user terminal 20000, the management server 30000, the external server 40000, and the access unit 50000 to communicate within the payment system 1000 may be configured regardless of a communication mode, such as wired or wireless, and may be implemented as various communication networks, such as a LAN, MAN, or WAN. Preferably, the communication network according to an embodiment of the present disclosure may be the known World Wide Web (WWW), etc.

Wireless communication may include, for example, LTE, LTE Advance (LTE-A), code division multiple access (CDMA), wideband CDMA (WCDMA), ultra wide band (UWB), universal mobile telecommunications system (UMTS), and wireless broadband (WiBro), or global system for mobile communications (GSM). According to an embodiment, wireless communication may include, for example, wireless fidelity (WiFi), Bluetooth, Bluetooth Low Energy (BLE), Zigbee, NFC, magnetic secure transmission, radio frequency (RF), or body area network (BAN). According to an embodiment, wireless communications may include GNSS. GNSS may be, for example, global positioning system (GPS), global navigation satellite system (Glonass), Beidou navigation satellite system, or Galileo, the European global satellite-based navigation system.

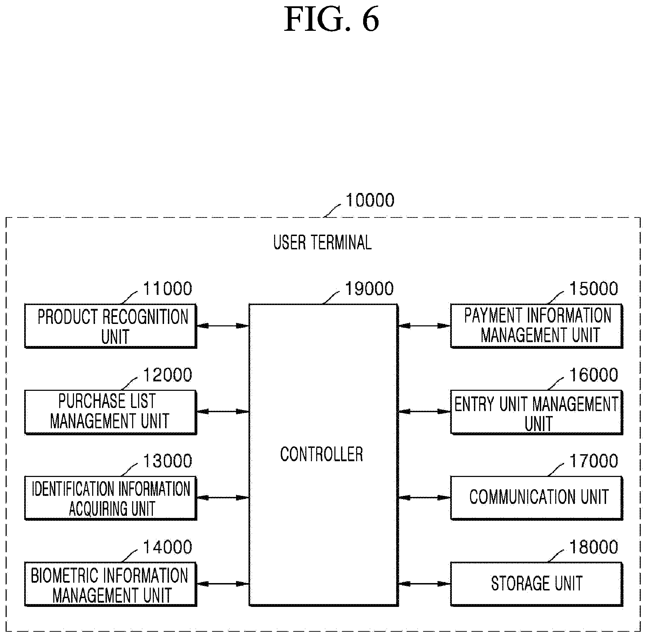

FIG. 6 is a block diagram schematically illustrating a configuration of the dedicated terminal 10000 according to an embodiment of the present disclosure.

Referring to FIG. 6, the dedicated terminal 10000 may include a product recognition unit 11000, a purchase list management unit 12000, an identification information acquiring unit 13000, a biometric information management unit 14000, a payment information management unit 15000, and an access unit management unit 16000, a communication unit 17000, a storage unit 18000, and a controller 190.

The product recognition unit 11000 may recognize a product placed by the user on the product transportation unit 2000 through various recognition methods.

According to an embodiment, the product recognition unit 11000 may generate an image by visually imaging the surroundings. That is, the product recognition unit 11000 may acquire an image of an external product by utilizing an image collection device, such as a camera module or camcorder module mounted on the dedicated terminal 10000. The image collected by the product recognition unit 11000 may be in the form of a still photograph, but may also be in the form of an image including a plurality of frames.

The product recognition unit 11000 according to an embodiment may automatically operate to perform image capturing without user operation, or alternatively, the user may start image capturing by operating the dedicated terminal 10000 in a certain manner.

According to an embodiment, the product recognition unit 11000 may recognize a product to be purchased from a captured image through image analysis. Such image analysis may be performed in the dedicated terminal 10000, but may also be performed in the management server 30000. When image analysis is performed on the management server 30000, the product recognition unit 11000 may transmit the captured image to the management server 30000 and analyze the corresponding image from the management server 30000 to receive information on a certain product.

Image analysis performed on the dedicated terminal 10000 or the management server 30000 may be performed by an AI engine included in the dedicated terminal 10000 or the management server 30000. Such AI engine may perform image analysis using machine learning or deep learning technology. The AI engine may improve image analysis capabilities by setting multiple product images as learning data and performing learning through the set learning data.

The machine learning utilized by the AI engine may use at least one algorithm among haar like and CNN or CNN-based transformation models (R-CNN, Fast R-CNN, Faster R-CNN, YOLO, SSD, Mask R-CNN).

Such an AI engine may be implemented in hardware or software on the dedicated terminal 10000 or the management server 30000.

According to an embodiment, the product recognition unit 11000 may recognize a product to be purchased by recognizing a barcode or QR code marked on the product to be purchased, rather than by analyzing an external image of the product. That is, the product recognition unit 11000 may recognize the barcode or QR code present on the captured image and specify the type and number of products corresponding to the collected barcode or QR code.

According to an embodiment of the present disclosure, in recognizing the product to be purchased based on the captured image, the product recognition unit 11000 may collectively utilize a method of analyzing the external image of the product and a method of utilizing a barcode or QR code marked on the product.

In detail, in recognizing a product to be purchased, in the case of a product whose barcode or QR code is recognized on the collected image, the product recognition unit 11000 may specify a type of the product through the recognized barcode or QR code, and in the case of a product whose barcode or QR code is not recognized on the collected image, the product recognition unit 11000 may specify a type of the product through analysis of an external image of the product.

In other words, because only a portion of the product may appear on the image acquired by the image capturing unit 110, the barcode or QR code marked on the product exterior may not be recognized, and the accuracy of product recognition may be improved by utilizing a product recognition method through external image analysis together.

The operation of the product recognition unit 11000 may be performed on the management server 30000 as the product recognition unit transmits the collected image to the management server 30000.

According to an embodiment of the present disclosure, the product recognition unit 11000 may obtain information about the product based on an electronic tag recognition method, rather than based on captured image analysis in recognizing the product to be purchased.

Electronic tags may be applied in a form that utilizes RFID and NFC technology, and electronic tags may be included in or attached to each product in a form that includes product information, including price.

When recognizing a product using an electronic tag, the product recognition unit 11000 may recognize an electronic tag located within a certain interval from the dedicated terminal 10000 so that the user terminal 20000 recognizes the product to be purchased.

If the purchase list management unit 12000 determines that the product recognized by the product recognition unit 11000 is located within the product transportation unit 2000, the purchase list management unit 12000 may include the corresponding product in a preliminary purchase list.

That is, the purchase list management unit 12000 may determine whether to include the product recognized by the product recognition unit 11000 in the preliminary purchase list depending on whether the corresponding product is located within the product transportation unit 2000.

According to an embodiment, the purchase list management unit 12000 may recognize that a product included in the preliminary purchase list is removed from the product transportation unit 2000 and delete the recognized product from the preliminary purchase list.

The identification information acquiring unit 13000 may collect identification information for performing payment from the user. Collection of such identification information may be performed through an input unit of the dedicated terminal 10000, and the dedicated terminal 10000 may acquire identification information from the user through an input unit, such as a touch screen, keyboard, mouse, and voice recognition.

The identification information acquiring unit 13000 may specify information on the user and the user terminal 20000 through the acquired identification information.

Identification information may include an ID, password, PIN number, etc., or combinations thereof. According to an embodiment, the PIN number may be replaced with biometric information, which is described below.

The biometric information management unit 14000 may acquire the biometric information about the user after or in the process of acquiring the identification information from the user. Such biometric information may be used for identity authentication for payment.

According to an embodiment, the dedicated terminal 10000 may acquire and manage biometric information by communicating with a separate identity authentication device.

According to an embodiment of the present disclosure, biometric information used for identity authentication for payment may include any one of fingerprint information, iris information, facial image information, vein information, electrocardiogram information, or voice information, or combinations thereof.

According to an embodiment of the present disclosure, biometric information may be distributed to and stored in the dedicated terminal 10000, the user terminal 20000, the management server 30000, or other cloud, etc., and authentication may be performed thereon. That is, one piece of biometric information may be stored and kept in at least one of the aforementioned mediums, and at least a portion of the biometric information may be stored in a certain medium in a distributed manner.

For example, biometric information may be stored in the form of one of encrypted vector data, a pattern value, or a hash value, and may be stored in the user terminal 20000, management server 30000, or other cloud environments.

According to an embodiment, the biometric information management unit 14000 may transmit the user's sensing information to the management server 30000 or the external server 40000 using a wireless communication circuit, and obtain identification information, such as a mobile phone number for the identity authentication device, from the management server 30000 or the external server 40000. In addition, the biometric information management unit 14000 may transmit the user's sensing information to the identified identity authentication device and receive authentication data from the identity authentication device using a wireless communication circuit. The biometric information management unit 14000 may perform a determined function based on authentication data or output an authentication failure message through an input/output device.

The payment information management unit 15000 may generate payment information for products included in the preliminary purchase list and transmit the payment information to the user terminal 20000 specified by the identification information acquiring unit 13000. In this process, the biometric information management unit 14000 may transmit the acquired biometric information about the user to the user terminal 20000.

The user terminal 20000 may receive the biometric information and payment information from the dedicated terminal 10000, and according to an embodiment, the biometric information and payment information may be transmitted to the user terminal 20000 through the management server 30000.

The user terminal 20000 may perform identity authentication using the received biometric information. That is, the user terminal 20000 may determine whether the received biometric information matches the biometric information pre-stored on the user terminal 20000 and perform identity authentication based thereon. In a case where identity authentication is successfully performed, the user terminal 20000 may perform payment for products included in the preliminary purchase list through the received payment information.

After performing payment, the user terminal 20000 may transmit information on the completed payment to the dedicated terminal 10000 or the management server 30000. The dedicated terminal 10000, which has received information on whether payment has been performed, may provide payment completion information to the user through a display unit or audio output unit of the dedicated terminal 10000.

The user terminal 20000 may perform payment through various payment methods, such as credit card payment, check card payment, debit card payment, account transfer payment, virtual currency payment, point payment, open banking payment, and mobile payment, and such a payment method may utilize identity authentication through biometric information. Payment via card on the user terminal 10000 may be performed through a PG (Payment Gateway) server, but payment may also be performed by directly connecting to a card company server without going through a PG company server.

The user terminal 20000 may perform payment through a PISP. PISP provides a form of financial service that does not utilize a payment infrastructure of existing banks through open API, and allows consumers to make payment or remittance using their own accounts simply by logging in to a certain service.

According to an embodiment, when a product (e.g., alcohol, tobacco, etc.) requiring adult authentication exists in products recognized by the product recognition unit 11000 and included in the preliminary purchase list, the payment information management unit 15000 may transmit payment information to the user terminal 20000 only when adult authentication-related information is received from the user terminal 20000.

According to another embodiment, when a product requiring adult authentication exists in products recognized by the product recognition unit 11000 and included in the preliminary purchase list, the payment information management unit 15000 may generate and transmit payment information so that payment on the user terminal 20000 which has received the payment information may be performed only when adult authentication is completed on the user terminal 20000.

When the dedicated terminal 10000 receives payment completion information from the user terminal 20000, the access unit management unit 16000 may control opening and closing of the access unit 50000 at a certain location based on the information.

For example, the access unit 50000 may be an exit of a certain business premises, and the access unit management unit 16000 may control the access unit 50000 so that only a user who has completed payment for products located within the product transportation unit 2000 passes through the corresponding exit.

According to an embodiment, the access unit management unit 16000 may detect a location of the dedicated terminal 10000 and control the access unit 50000 to be opened only when the dedicated terminal 10000 is located near the access unit 50000.

The communication unit 17000 allows the dedicated terminal 10000 to communicate with the user terminal 20000, the management server 30000, the external server 40000, and the access unit 50000. A communication network used by the communication unit 17000 to perform communication may be configured regardless of communication mode, such as wired or wireless, and may be implemented with various communication networks, for example, a LAN, MAN, WAN, etc. As described above, the LAN may be implemented through UWB, NFC, ultrasonic waves, MAT, beacons, etc.

The storage unit 18000 serves to store information collected, generated, and processed within various components of the dedicated terminal 10000. That is, the storage unit 18000 may store information on the user, information on a payment method, and information on an algorithm used by the AI engine. The storage unit 18000 may include, for example, memory, cache, buffer, etc., and may include software, firmware, hardware, or a combination of at least two thereof. Memory may include volatile and/or non-volatile memory. The memory may store, for example, commands or data related to at least one other component of the identity authentication device. According to an embodiment, the memory may store software and/or programs. A program may include, for example, a kernel, middleware, an application programming interface (API), and/or an application program (or "application"). Memory may include, for example, internal memory or external memory. Internal memory may include at least one of volatile memory (such as DRAM, SRAM, or SDRAM) and non-volatile memory (such as one time programmable ROM (OTPROM), PROM, EPROM, EEPROM, mask ROM, flash ROM, flash memory, hard drive, or solid state drive (SSD)). External memory may include a flash drive, for example, compact flash (CF), secure digital (SD), Micro-SD, Mini-SD, extreme digital (xD), multi-media card (MMC), or memory stick. The external memory may be functionally or physically connected to the identity authentication device through various interfaces.

The controller 190 may perform a function of controlling data flow between the product recognition unit 11000, the purchase list management unit 12000, the identification information acquiring unit 13000, the biometric information management unit 14000, the payment information management unit 15000, the access unit management unit 16000, the communication unit, and the storage unit 18000. That is, the controller 190 may support the product recognition unit 11000, the purchase list management unit 12000, the identification information acquiring unit 13000, the biometric information management unit 14000, the payment information management unit 15000, the access unit management unit 16000, the communication unit 17000, and the storage unit 18000 to perform their own unique functions.

In FIG. 6, the product recognition unit 11000, the purchase list management unit 12000, the identification information acquiring unit 13000, the biometric information management unit 14000, the payment information management unit 15000, and the access unit management unit 16000 are components functionally classifying the controller 190 and may be integrated as one controller 190 to be configured.

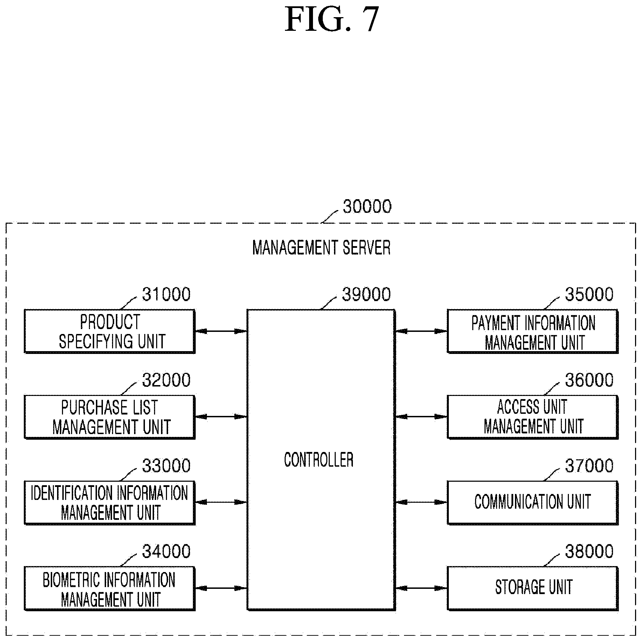

FIG. 7 is a block diagram schematically illustrating a configuration of the management server 30000 according to an embodiment of the present disclosure.

Referring to FIG. 7, the management server 30000 may include a product specifying unit 31000, a purchase list management unit 32000, an identification information management unit 33000, a biometric information management unit 34000, a payment information management unit 35000, an access unit management unit 36000, a communication unit 37000, a storage unit 38000, and a controller 390.

The product specifying unit 31000, the purchase list management unit 32000, the identification information management unit 33000, the biometric information management unit 34000, the payment information management unit 35000, the access unit management unit 36000, communication unit 37000, the storage unit 38000, and the controller 390 of the management server 30000. 37000 respectively correspond to the product recognition unit 11000, the purchase list management unit 12000, the identification information acquiring unit 13000, the biometric information management unit 14000, the payment information management unit 15000, the access unit management unit 16000, the communication unit 17000, the storage unit 18000, and the controller 190. Of the dedicated terminal 10000 to perform a similar role.

For example, the product specifying unit 31000 may receive an image captured by the product recognition unit 11000, analyze the image through an AI engine to specify a recognized product, and transmit information on the specified product to the dedicated terminal 10000 or add the specified product to a purchase list. In addition, the purchase list management unit 32000, the identification information management unit 33000, and the biometric information management unit 34000 may each receive the purchase list, identification information, and biometric information about the user from the dedicated terminal 10000, and manage and utilize the received purchase list, identification information, and biometric information about the user. The payment information management unit 35000 and the access unit management unit 36000 may also receive payment information and management information on the access unit from the dedicated terminal 10000, and manage and utilize the information.

In other words, the management server 30000 may receive necessary data from a corresponding component of the dedicated terminal 10000 and manage the received data, and may serve as an intermediary that transmits the data to the user terminal 20000, the external server 40000, or the access unit 50000.

The management server 30000 according to an embodiment may be located within a certain space where users purchase products, but alternatively, the management server 30000 may be located outside the certain space to manage a plurality of branches together.

As such, according to an embodiment of the present disclosure, even when the user terminal 20000 and the management server 30000 are not located in an offline branch where users purchase products, recognition of and payment for a product may be performed through only the dedicated terminal 10000 installed on the product transportation unit 2000.

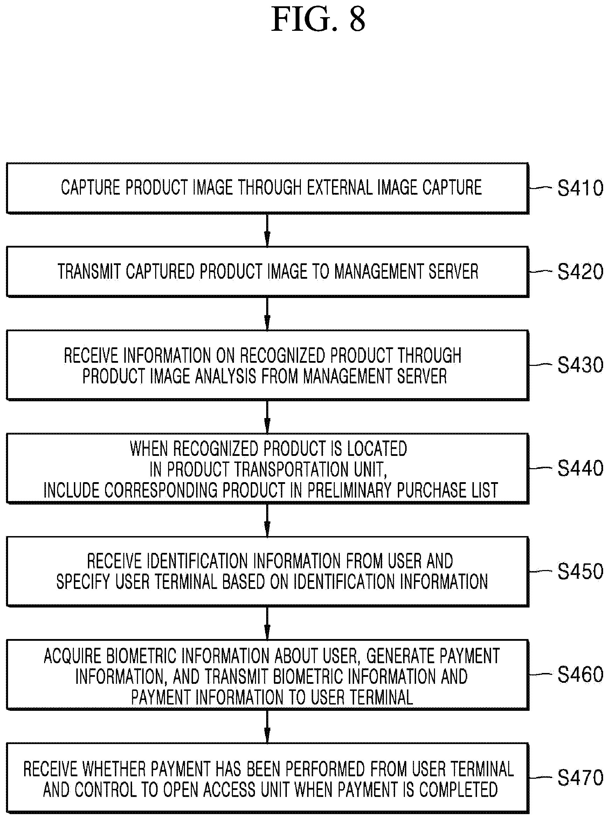

FIG. 8 is a flowchart illustrating how the dedicated terminal 10000 according to an embodiment of the present disclosure recognizes and pays for a product using the payment system 1000 of the present disclosure.

Referring to FIG. 8, the dedicated terminal 10000 installed in the product transportation unit 2000 may specify the number and type of products by capturing images of the products through external image capturing.

As described above, the dedicated terminal 10000 may recognize a product the user wants to purchase through various methods. In FIG. 8, among these various methods, a process of specifying the type and number of products through an image analysis method is described as an example.

The dedicated terminal 10000 may capture an image of a product the user wants to purchase through external image capturing (S410) and transmit the captured image to the management server 30000 (S420).

The management server 30000 may receive an image for a product from the dedicated terminal 10000 and perform analysis on the image. Such image analysis may be performed by an AI engine mounted on the management server 30000. In addition to analyzing the product image itself, the type and number of products may be specified through recognition of barcodes or QR codes included in the image.

The dedicated terminal 10000 may receive information on the product recognized through analysis of the product image from the management server 30000 (S430), and then determine whether the recognized product is located within the product transportation unit 2000. When it is determined that the recognized product is located within the product transportation unit 2000, the dedicated terminal 10000 may include the corresponding product in a preliminary purchase list (S440).

Thereafter, when the user wants to purchase products in the product transportation unit 2000, the user may input identification information into the dedicated terminal 10000, and the dedicated terminal 10000 may receive the identification information from the user and retrieve user information based on the identification information to specify the user terminal (S450).

The dedicated terminal 10000 may acquire biometric information about the user, generate payment information for products included in the preliminary purchase list, and transmit the biometric information and payment information to the user terminal 20000 (S460).

On the user terminal 20000 side, identity authentication may be performed through biometric information received from the dedicated terminal 10000, which may be performed based on comparison between the biometric information received from the dedicated terminal 10000 and the biometric information stored on the user terminal 20000. Thereafter, when identity authentication is successfully completed, payment may be performed in the user terminal 20000 using payment information received from the dedicated terminal 10000.

Such payment may be performed through various payment methods, such as credit card payment, check card payment, debit card payment, account transfer payment, virtual currency payment, point payment, open banking payment, mobile payment, and payment through PISP.

After performing the payment, the user terminal 20000 may transmit information on payment completion to the dedicated terminal 10000, and the dedicated terminal 10000 may receive whether the payment has been performed from the user terminal 20000, and when payment has been normally completed, the dedicated terminal 10000 may control the access unit 50000 to be opened (S470).

According to an embodiment, control of the access unit 50000 may not be performed immediately when payment is completed. That is, when the product transportation unit 2000 in which payment has been normally completed moves near the access unit 50000, the access unit 50000 may be controlled to be opened according to location information about the dedicated terminal 10000 and the access unit 50000. In addition, if an additional product is recognized in the product transportation unit 2000 after payment is completed, control of the access unit 50000 by the dedicated terminal 10000 may not be performed until additional payment is made for the added product.

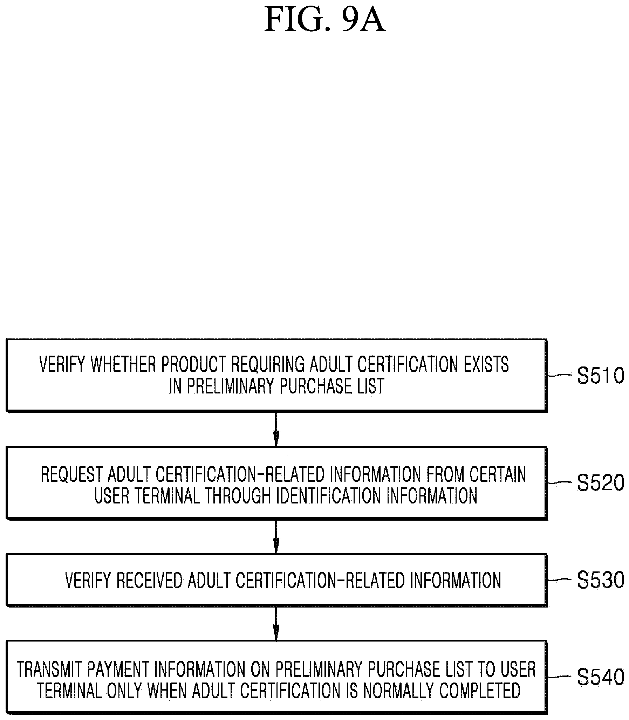

FIGS. 9A to 9B are flowcharts illustrating a method by which a dedicated terminal 10000 pays for a product requiring adult authentication for purchase, according to an embodiment of the present disclosure.

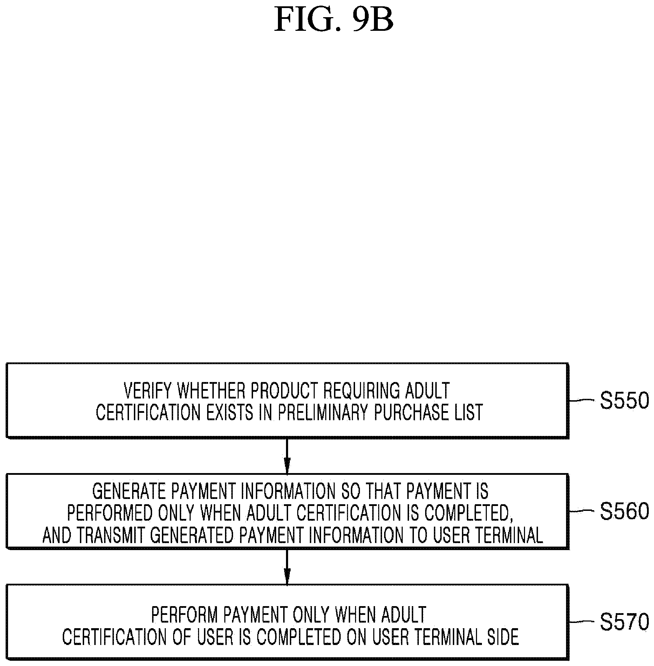

As described above, the dedicated terminal 10000 may process payment for a product requiring adult authentication in different manners, as shown in FIGS. 9A and 9B.

Referring first to FIG. 9A, the dedicated terminal 10000 may verify whether a product requiring adult authentication exists in the preliminary purchase list at a payment stage (S510), and if a product requiring adult authentication exists, the dedicated terminal 10000 may request adult authentication-related information from a certain user terminal 20000 through identification information before generating payment information and transmitting the payment information to the user terminal 20000.

Thereafter, the dedicated terminal 10000 may receive adult authentication-related information from the user terminal 20000 and verify the received information (S530), and only when adult authentication is successfully completed, the dedicated terminal 10000 may transmit payment information for products included in the preliminary purchase list to the user terminal 20000 (S540).

Next, referring to FIG. 9B, the dedicated terminal 10000 may verify whether a product requiring adult authentication exists in the preliminary purchase list at the payment stage (S550) and, in the process of generating payment information for products included in the preliminary purchase list, the dedicated terminal 10000 may generate payment information in the form that allows payment only when adult authentication is completed, and transmit the payment information to the user terminal 20000 (S560).

The user terminal 20000 has to complete adult authentication to perform payment using the payment information received from the dedicated terminal 10000, and payment may be performed only after adult authentication is successfully completed (S570).

In this manner, the payment system 1000 may be equipped with an adult authentication verification system necessary for purchasing products through various methods.

According to the various embodiments described above, the payment system of the present disclosure may support convenient non-face-to-face payment by consumers through the dedicated terminal installed in the product transportation unit, and accordingly, unmanned stores may be conveniently operated. In addition, consumers may perform payment using their terminals even when they do not have their own terminals.

The operations of the method or algorithm described in connection with embodiments of the present disclosure may be implemented directly in hardware, implemented as a software module executed by hardware, or combinations thereof. The software module may reside on random access memory (RAM), read-only memory (ROM), erasable programmable ROM (EPROM), electrically erasable programmable ROM (EEPROM), flash memory, hard disk, removable disk, CD-ROM, any type of computer-readable recording medium well known in the art to which the present disclosure pertains.

Above, embodiments of the present disclosure have been described with reference to the accompanying drawings, but those skilled in the art will understand that the present disclosure may be implemented in other certain forms without changing the technical idea or essential features. Therefore, the embodiments described above should be understood in all respects as illustrative and not restrictive.

## Claims

1. A method of performing payment using a user terminal by a payment system, the method comprising:
recognizing, by the user terminal, a product to be purchased;
transmitting, by a seller terminal that recognizes biometric information about a user, the biometric information about the user to the user terminal;
performing, by the user terminal, identity authentication, based on whether the biometric information about the user received from the seller terminal matches biometric information pre-stored in the user terminal; and
in a case where identity authentication is successfully performed on the user terminal, performing, by the user terminal, payment on a product recognized through the user terminal.

2. The method of claim 1, wherein the biometric information includes one or more of fingerprint information, iris information, facial image information, vein information, electrocardiogram information, or voice information.

3. The method of claim 1, wherein the seller terminal recognizes the user terminal passing through a gate connected to the seller terminal and transmits a payment request signal to the user terminal, and the user terminal performs payment for a product based on the payment request signal received from the seller terminal.

4. The method of claim 1, wherein, in the recognizing of the product to be purchased by the user terminal,
in a case where an external image of the product is collected by an image capturing unit mounted on the user terminal, the user terminal analyzes the collected external image of the product to specify a type and quantity of the product.

5. The method of claim 4, wherein the analyzing of the collected external image of the product to specify the type and quantity of the product is performed by an artificial intelligence engine mounted on the user terminal, and the artificial intelligence engine performs learning through the external image of the product.

6. The method of claim 1, wherein, in the recognizing of the product to be purchased by the user terminal, information about the product is obtained through an electronic tag included in the product.

7. The method of claim 1, wherein, in the recognizing of the product to be purchased, only a product located within a predefined product storage member is recognized.

8. The method of claim 7, wherein the product storage member includes a cart, a basket, or a bag.

9. The method of claim 1, wherein the user terminal provides information on a total price of one or more products recognized as products to be purchased through a display device or a sound generating device.

10. The method of claim 1, wherein, in the recognizing of the product to be purchased by the user terminal, in a case where a barcode or QR code is recognized by an image capturing unit mounted on the user terminal, the user terminal specifies a type of product corresponding to a collected barcode or QR code.

11. The method of claim 1, wherein, in the recognizing of the product to be purchased by the user terminal, a type of product whose barcode or QR code is recognized by the image capturing unit mounted on the user terminal, is specified through the barcode or QR code, and a type of product whose barcode or QR code is not recognized on a collected image, is specified through analysis of an external image of the product.

12. The method of claim 1, wherein, in the recognizing of the product to be purchased by the user terminal, product recognition information is received from a product recognition device connected to the seller terminal.

13. The method of claim 1, wherein the performing of payment on the product recognized through the user terminal by the user terminal further includes:
generating, by the user terminal, a QR code or barcode including information on at least one product recognized as a product to be purchased and payment method information; and
performing payment, by the seller terminal recognizing the QR code or barcode, based on the product information and payment method information included in the QR code or barcode.

14. A method of performing payment using a user terminal by a payment system, the method comprising:
recognizing, by the user terminal, a product to be purchased;
recognizing biometric information about a user by the user terminal;
performing identity authentication, by the user terminal, through whether the recognized biometric information matches biometric information pre-stored on the user terminal; and
in a case where identity authentication is successfully performed on the user terminal, performing payment for the product recognized through the user terminal by the user terminal.

15. A payment system using a user terminal, the payment system comprising:
a seller terminal recognizing the biometric information about a user and transmitting the biometric information about the user to the user terminal; and
a purchaser terminal recognizing a product to be purchased, performing identity authentication by determining whether the biometric information about the user received from the seller terminal matches biometric information pre-stored in an inside thereof, and performing payment on the recognized product in a case where identity authentication is successfully performed.
